# EUROPEAN PATENT SPECIFICATION

(11) **EP 3 480 494 B1**
(45) Date of publication and mention of the grant of the patent: **30.12.2020**
(21) Application number: 18203995.8
(22) Date of filing: 01.11.2018
(51) Int. Cl.: F16H 57/04

(54) **HEAT TRANSFER SYSTEM**
WÄRMEÜBERTRAGUNGSSYSTEM
SYSTÈME DE TRANSFERT THERMIQUE

(30) Priority: 03.11.2017 US 201715803152
(43) Date of publication of application: 08.05.2019
(73) Proprietor: Dana Heavy Vehicle Systems Group, LLC, Maumee, OH 43537 (US)
(72) Inventor: SLESINSKI, Steven G., Ann Arbor, MI 48104 (US); TROST, Harry W., Royal Oak, MI 48073 (US)
(74) Representative: Pfenning, Meinig & Partner mbB

(56) References cited:
- CN-A- 105 889 478
- CN-U- 202 040 516
- DE-A1-102008 020 646
- JP-A- 2012 159 173

## Description

### BACKGROUND

The present disclosure relates to power transmission components and heat transfer systems. Axle assemblies in wheeled vehicle drivetrains are known to employ a differential apparatus to permit an outer drive wheel to rotate at a greater velocity than an inner drive wheel when operating a vehicle through a turn. Differential apparatuses employ a pinion gear drivingly engaged with a ring gear, which in turn rotates a differential case having a number of bevel gears engaged with a pair of side gears, the side gears being coupled with a pair of axles. The differential apparatus is located within a carrier housing of the axle assembly. Conventionally, a sump in the carrier housing contains lubricant to reduce friction between surfaces including, but not limited to, the pinion gear and ring gear, and the pair of side gears and the bevel gears.

In conventional axle assemblies, the lubricant causes parasitic drag that is exaggerated when the ambient temperature of the carrier housing is reduced below typical summer operating temperatures, such as during operation in cold weather. Lubricant temperature effects the viscosity of the lubricant, such that cold weather operation of an axle assembly creates an increase in vehicle fuel consumption. During a cold weather warm-up cycle of an axle assembly, the lubricant may disperse heat generated between the moving parts at a rate which prevents the viscosity of the lubricant from decreasing for several hours, resulting in increased drag and fuel consumption for a prolonged period of time. Similarly, lubricant within a transmission or gear box may also cause parasitic drag that is heightened during cold weather.

DE102008020646A1 relates to an arrangement having a housing for defining a chamber with a lubricant. A differential arrangement is positioned in the chamber. A pair of axles is aligned along a common axis of rotation that projects outwardly from the differential arrangement. A heat exchanger is arranged in the chamber. The heat exchanger comprises fluid passages with an inlet and an outlet for fluid connection with a fluid circuit of an internal combustion engine. The heat exchanger is immersed into the lubricant. The fluid passages are cast within a frame of vehicle.

DE102008020646A1 does not disclose a heat transfer system comprising an induction heater disposed at least partially within a carrier housing, a lubricant catch disposed on an interior surface of said carrier housing, and a lubricant conduit in fluid communication with said lubricant catch, wherein said induction heater is disposed within said lubricant conduit.

Increasing the temperature of the lubricant disposed in the axle assembly and/or gear box to minimize or eliminate the duration of a warm-up cycle can reduce parasitic drag and increase fuel economy.

### SUMMARY

A heat transfer system for a vehicle providing these advantages is defined in appended claim 1. In one embodiment, the heat transfer system includes an axle assembly having a carrier housing. The carrier housing defines a sump containing at least a portion of a lubricant. A heat exchanger having one or more electrically conductive elements, is at least partially disposed within the carrier housing, and is electrical connection an electrical power source.

In another embodiment, a heat transfer system for a vehicle includes an axle assembly having a carrier housing. The carrier housing defines a sump containing at least a portion of a lubricant. The heat transfer system further includes a heat exchanger at least partially disposed within the sump. The heat exchanger is in fluid communication with a battery cooling unit having a liquid coolant.

In yet another embodiment, a heat transfer system for a vehicle includes a gear box having at least one gear, and a fluid rail including a manifold and a nozzle. The heat transfer system also includes a heat exchanger having an induction coil disposed about a portion of the fluid rail. An electrical power source is in electrical connection with the heat exchanger.

### BRIEF DESCRIPTION OF THE SEVERAL VIEWS OF THE DRAWINGS

The accompanying drawings are incorporated herein as part of the specification. The drawings described herein illustrate embodiments of the presently disclosed subject matter, and are illustrative of selected principles and teachings of the present disclosure. However, the drawings do not illustrate all possible implementations of the presently disclosed subject matter, and are not intended to limit the scope of the present disclosure in any way.
FIG. 1 is a schematic representation of a vehicle having a heat transfer system according to an embodiment of the presently disclosed subject matter;
FIG. 2 is a perspective view of a portion of an axle assembly having a heat transfer system according to an embodiment of the presently disclosed subject matter;
FIG. 3 is a side view of a portion an axle assembly having a heat transfer system according to another embodiment of the presently disclosed subject matter;
FIG. 4 is a sectional view of a portion of an axle assembly having a heat transfer system according to yet another embodiment of the presently disclosed subject matter;
FIG. 5 is a side view of a portion of an axle assembly having a heat transfer system according to still another embodiment of the presently disclosed subject matter;
FIG. 6 is a side view of a portion of a gear box having a heat transfer system according to an embodiment of the presently disclosed subject matter;
FIG. 7 is a side view of a portion of a gear box having a heat transfer system according to another embodiment of the presently disclosed subject matter; and
FIG. 8 is a schematic representation of a vehicle having a heat transfer system according to another embodiment of the presently disclosed subject matter.

### DETAILED DESCRIPTION

It is to be understood that the invention may assume various alternative orientations and step sequences, except where expressly specified to the contrary. It is also to be understood that the specific devices, assemblies, systems and processes illustrated in the attached drawings, and described in the following specification are simply exemplary embodiments of the inventive concepts defined herein. Hence, specific dimensions, directions or other physical characteristics relating to the embodiments disclosed are not to be considered as limiting, unless expressly stated otherwise. Also, although they may not be, like elements in various embodiments described herein may be commonly referred to with like reference numerals within this section of the application.

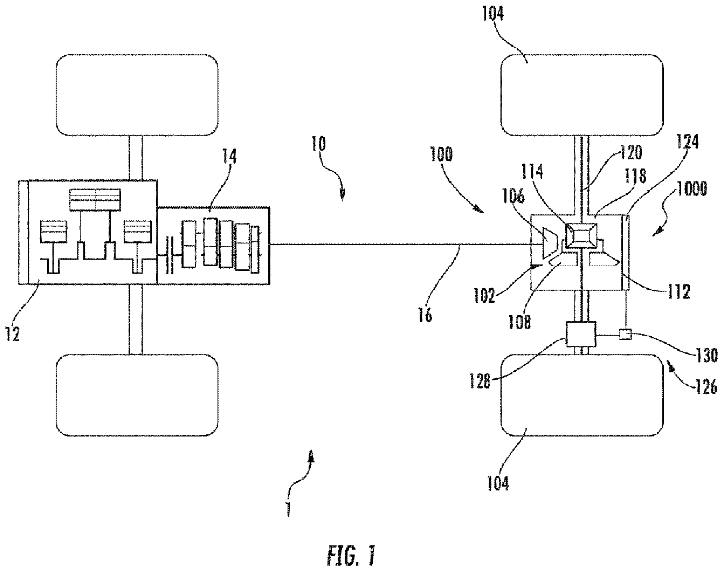

As illustrated in FIG. 1, in an embodiment, an axle assembly 100 comprises a lubricant heating system 1000. However, the lubricant heating system 1000 is not limited to use with the axle assembly 100 described herein. Instead, the lubricant heating system 1000 may be utilized with vehicles and assemblies of other shapes, sizes, orientations, and designs.

In certain embodiments, the lubricant heating system 1000 is utilized with a vehicle 1. The lubricant heating system 1000 described herein may additionally have applications in both light duty and heavy duty vehicles, and for passenger, commercial, and off-highway vehicles. It would be understood by one of ordinary skill in the art that the lubricant heating system 1000 also has industrial, locomotive, military, agricultural, and aerospace applications.

Referring now to FIG. 1, in an embodiment, the vehicle 1 may comprise a driveline arrangement 10 having a longitudinally disposed power source 12. The power source 12 may be, but is not limited to, an internal combustion engine, an electric motor, a traction battery, or a fuel cell. The driveline arrangement 10 may include a transmission 14 having an input driveably connected to the power source 12, and an output driveably connected to a differential mechanism 102 of the axle assembly 100. The transmission 14 may also be referred to herein as a gear box. The differential mechanism 102 is driveably connected to a primary wheel-set 104.

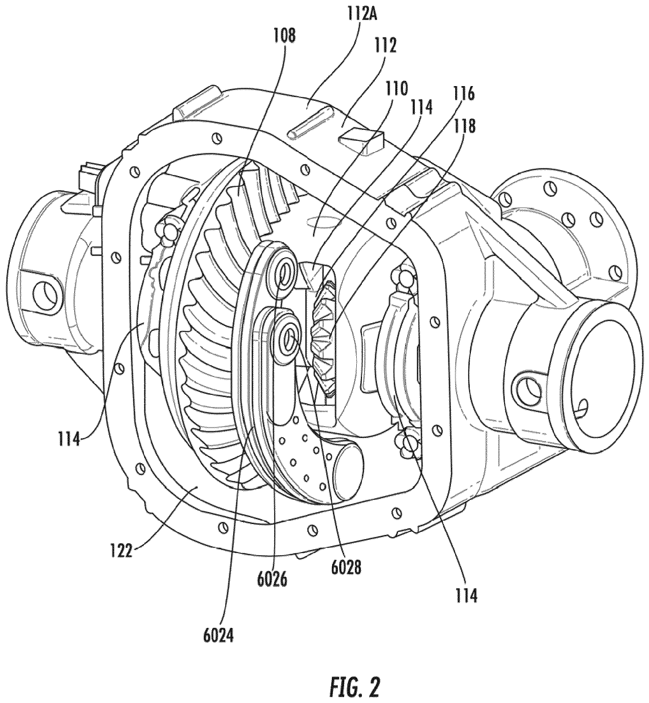

The output of the transmission 14 is coupled with a pinion shaft 16 rotatably mounted in the axle assembly 100. A pinion gear 106 is coupled with an end of the pinion shaft 16 opposite the transmission 14, and is in continuous meshed engagement with a ring gear 108 to transmit rotational drive thereto. The ring gear 108 is coupled with a differential case 110 (see FIG. 2). The differential case 110 may be fixed to the ring gear 108 via a plurality of fasteners, and rotates with the ring gear 108. The differential case 110 is mounted for rotation within a carrier housing 112 of the axle assembly 100 via a pair of differential bearings (not depicted) coupled with a pair of differential bearing caps 114.

As illustrated in FIGS. 1 and 2, the differential case 110 houses one or more pinion gears 114 mounted on at least one pinion shaft 116. The one or more differential pinion gears 114 are meshed with side gears 118 within the differential case 110. The side gears 118 comprise radially inward projecting splines which engage respective axle half shafts 120. The differential case 110 further comprises a pair of axle half shaft bores through which the axle half shafts 120 are inserted into engagement with the side gears 118. In an embodiment, the axle half shafts 120 are secured in their position in the differential case by c-clips (not depicted) inserted into grooves in the axle half shafts 120.

Referring now to FIG. 2, the carrier housing 112 comprises a forward portion 112A and a rearward portion 112B. The interior of the carrier housing forward and rearward portions 112A, 112B define a lubricant sump 122. The lubricant sump 122 holds a predetermined volume of lubricant (not depicted).

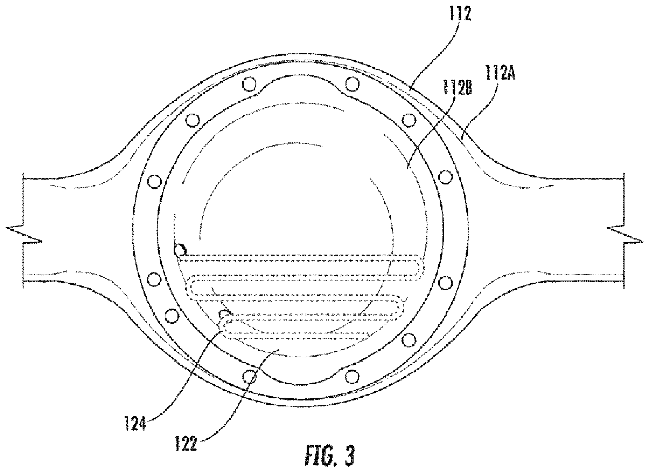

In an embodiment, as illustrated in FIG. 3, a heat exchanger 1024 of the lubricant heating system 1000 may be coupled with the interior of the carrier housing rearward portion 112B. The heat exchanger 1024 may comprise a heating element disposed on the carrier housing rearward portion 112B such that it is at least partially submerged within the lubricant in the sump 122. As illustrated in FIG. 3, the heating element may include a folded tubular geometry. In other embodiments, the heating element may comprise a straight or coiled geometry. The length of the heating element may be changed to increase or decrease the amount of heat transferred to the lubricant in the sump 122. The heat exchanger 1024 is coupled with a controller 1032.

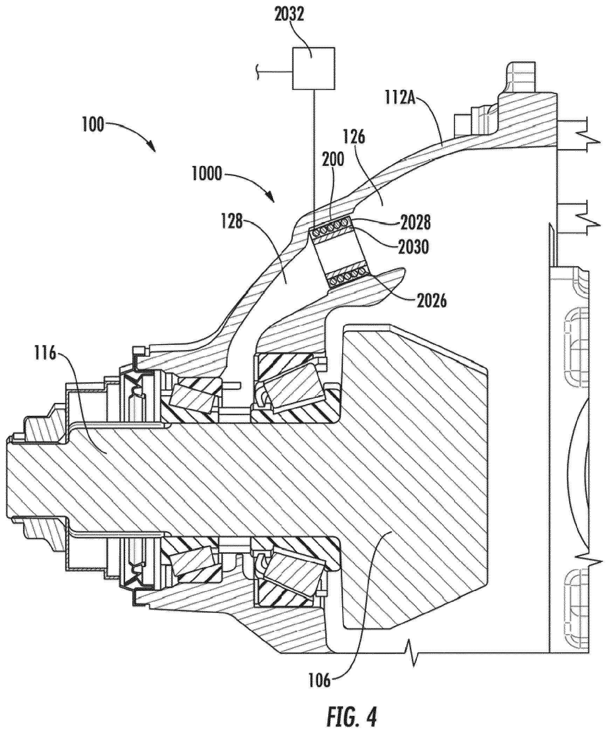

As illustrated in FIG. 4, in another embodiment, a heat exchanger 2024 may be located in the lubricant flow path. The heat exchanger 2024 is be disposed in a lubricant catch 126, or in a lubricant conduit 128 in fluid communication with the lubricant catch 126. The heat exchanger 2024 comprises an induction heater. In one embodiment, the heat exchanger 2024 includes an induction coil 2026 disposed in a potting material 2028. The potting material 2028 defines a generally hollow cylindrical geometry to accommodate a tube conduit 2030 coaxially disposed therein. The potting material 2028 may comprise any potting compound able to endure the temperatures achieved by the tube conduit 2030 and not corrode in the presence of the lubricant. In one embodiment, the potting materail 2028 may comprise a ceramic. The potting material 2028 may be sealed against the lubricant catch 126 or lubricant conduit 128 via an O-ring (not depicted). The tube conduit 2030 comprises a ferromagnetic material. The heat exchanger 2024 is in electrical connection with a controller 2032.

During operation, electrical current is communicated to the induction coil 2026 to produce eddy currents within the tube conduit 2030. The alternating magnetic field within the tube conduit 2030 generates heat within the material thereof. Heat from the tube conduit 2030 is tranfserred to the lubricant passing therethrough via convective heat transfer. Ferrous particles produced by normal wear on the axle assembly 100 may be suspended in the lubricant. The ferrous particles may also experience inductive heating when the lubricant flows through the tubular conduit 2030. Heating of the ferrous particles suspended within the lubricant contributes to the warm-up of the lubricant.

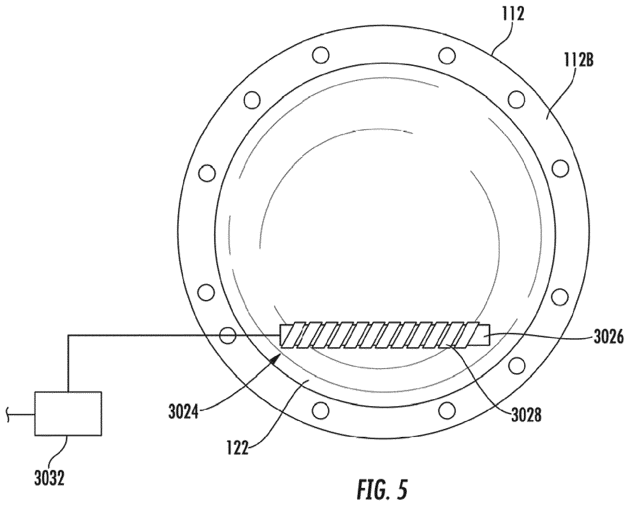

As illustrated in FIG. 5, in another embodiment, a heat exchanger 3024 may be located in the lubricant sump 122, and coupled with either the carrier housing forward or rearward portions 112A, 112B. The heat exchanger 3024 may comprise an induction heater having a ferromagnetic core 3026 coupled with the interior surface of the carrier housing rearward portion 112B. An induction coil 3028 disposed about the core 2026 receives electrical current to generate heat within the core 2026 as described above. In operation, heat is transferred from the heat exchanger 3024 to the lubricant in the sump 122. The heat exchanger 3024 is in electrical connection with a controller 3032.

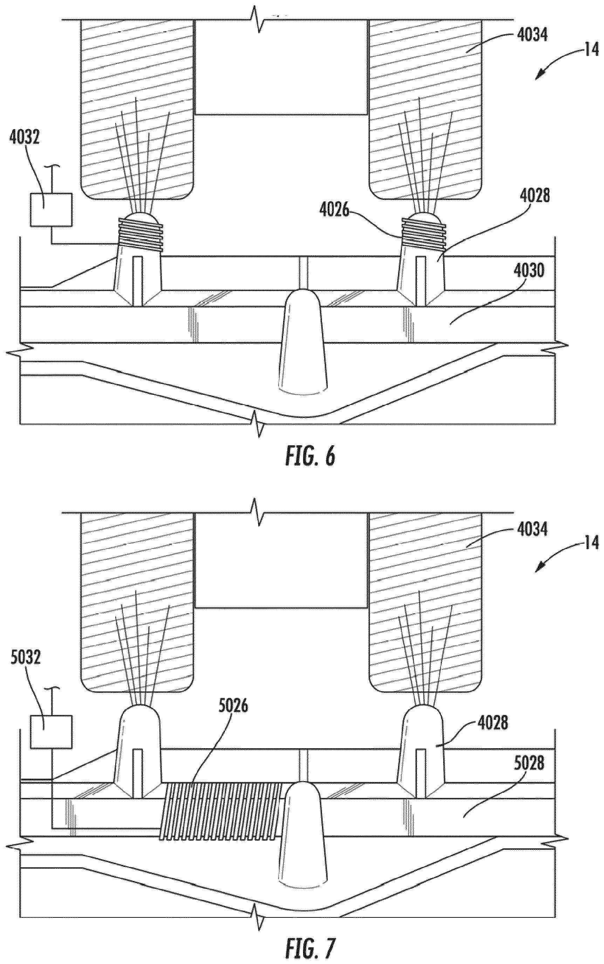

In another embodiment, as illustrated in FIG. 6, a heat exchanger 4024 may be integrated into the transmission 14 to heat the lubricant therein. The transmission 14 includes a fluid rail 4030 comprising a fluid conduit (not depicted) and at least one nozzle 4028. Pressurized lubricant is ejected from the fluid rail nozzle 4028 onto at least one gear 4034 of the transmission 14. The heat exchanger 4024 comprises an induction heater comprising an induction coil 4026 disposed about the at least one nozzle 4028. The nozzle 4028 includes at least a portion comprising a ferromagnetic material. Electrical current supplied to the induction coil 4026 generates heat within the material of the nozzle 4028 as described above. Heat is transferred to the lubricant as the lubricant is sprayed out of the heated nozzle 4028. The heat exchanger 4024 is in electrical connection with a controller 4032.

In still another embodiment, as illustrated in FIG. 7, a heat exchanger 5024 may be integrated into the transmission 14. The heat exchanger 5024 is an induction heater comprising an induction coil 5026 disposed about at least a portion of a fluid rail 5028. The induction coil 5026 generates heat within the fluid rail 5028 or a portion of a manifold thereof. As lubricant flows through the fluid rail 5028, heat is transferred from the fluid rail 5028 to the lubricant. The heat exchanger 5024 is in electrical connection with a controller 5032. Persons skilled in the art will recognize that the heat exchanger 4024 and 5024 may be utilized in any gear box.

As illustrated in FIG. 1, in an embodiment, the heat exchanger 1024 may receive electrical power from a regenerative braking apparatus 1026. Any of the heat exchangers 1024, 2024, 3024, 4024, 5024 may utilize the regenerative braking apparatus 1026 as a power source. The regenerative braking apparatus 1026 includes a generator 1028 for converting kinetic energy from the front or rear axle during deceleration of the vehicle into electrical energy. The generator 1028 is in electrical connection with a controller 1032, 2032, 3032, 4032, 5032 which is in electrical connection with the heat exchanger 1024, 2024, 3024, 4024, 5024. In an embodiment, a battery or capacitor (not depicted) may also be in electrical communication with the controller 1032, 2032, 3032, 4032, 5032.

In another embodiment (not depicted), the heat exchangers 1024, 2024, 3024, 4024, 5024 may receive electrical power from a solar panel. The solar panel is in electrical connection with the controller 1032, 2032, 3032, 4032, 5032. In an embodiment, a battery or capacitor (not depicted) may be in electrical connection between the controller 1032, 2032, 3032, 4032, 5032 and the solar panel. The solar panel may be positioned on an outer surface of the vehicle 1.

In yet another embodiment (not depicted), the heat exchangers 1024, 2024, 3024, 4024, 5024 may receive electrical power from a motor-generator/inverter. The motor-generator is in electrical connection with the controller 1032, 2032, 3032, 4032, 5032. A battery or capacitor (not depicted) may be in electrical connection between the controller 1032, 2032, 3032, 4032, 5032 and the motor-generator. The motor-generator may be utilized as a power source for recharging the battery cells of a hybrid-electric or full electric vehicle. During the warm-up cycle of the axle assembly 10, the electrical energy generated by the motor-generator may be communicated to the heat exchanger 1024, 2024, 3024, 4024, 5024, or to a battery or a capacitor electrically connected thereto.

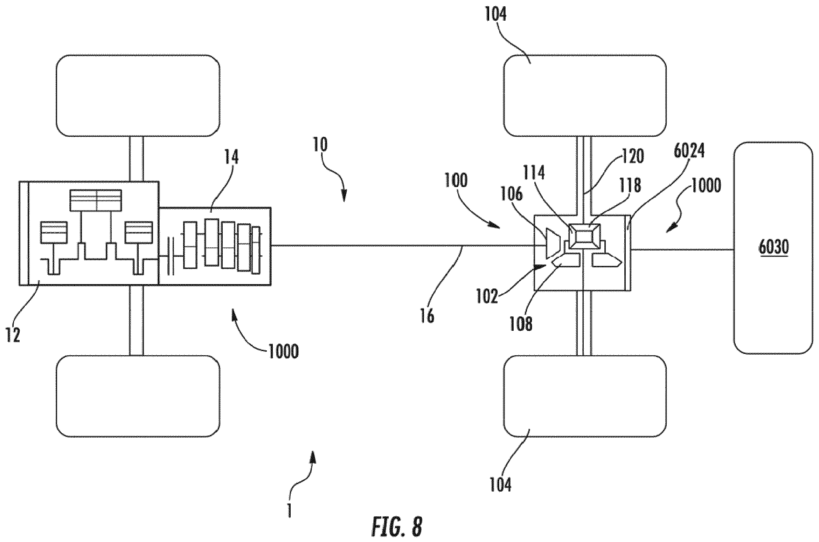

In still another embodiment, as illustrated in FIGS. 2 and 8, a heat exchanger 6024 may be disposed in the carrier housing 112. In one embodiment, as illustrated in FIG. 2, the heat exchanger 6024 comprise a stacked-plate heat exchanger located axially adjacent to the ring gear 108. The heat exchanger 6024 includes an inlet 6026 and an outlet 6028 in fluid communication via a fluid conduit (not depicted). The heat exchanger inlet and outlet 6026, 6028 are in fluid communication with a liquid-cooled battery cooling unit 6030 (see FIG. 8). The battery cooling unit 6030 is a thermal-management apparatus utilized to extract heat from the battery cells of hybrid-electric or full-electric vehicle. Liquid coolant from the battery cooling unit 6030 is circulated through the heat exchanger 6024 via the inlet and outlet 6026, 6028 to transfer heat from the battery cells to the lubricant in the axle assembly 100.

In an embodiment, a thermal sensor (not depicted) disposed in the carrier housing, and in electrical connection with the controller 1030, 2032, 3032 is utilized to determine the temperature of the lubricant in the axle assembly sump 122. Once a predetermined temperature of the lubricant is achieved, the controller 1030, 2032, 3032 ceases to deliver electrical energy to the heat exchanger 1024, 2024, 3024.

While various embodiments have been described above, it should be understood that they have been presented by way of example, and not limitation. It will be apparent to persons skilled in the relevant art that the disclosed subject matter may be embodied in other specific forms without departing from the essential characteristics thereof as defined by the appended claims. The embodiments described above are therefore to be considered in all respects as illustrative, not restrictive.

## Claims

1. A system for a vehicle (1), comprising:
an axle assembly (100) having a carrier housing (112), wherein said carrier housing (112) defines a sump (122);
a fluid lubricant at least partially disposed in said sump (122);
a heat exchanger (1024; 2024; 3024; 4024; 5024) having one or more electrically conductive elements, wherein said one or more electrically conductive elements are disposed within said carrier housing (112); and
an electrical power source (12) in electrical connection with said heat exchanger (1024);
wherein said heat exchanger (1024, 2024, 3024, 4024, 5024) further comprises an induction heater disposed at least partially within said carrier housing (112);
a lubricant catch (126) disposed on an interior surface of said carrier housing (112); and
a lubricant conduit (128) in fluid communication with said lubricant catch (126), wherein said induction heater is disposed within said lubricant conduit (128).

2. The system according to claim 1, wherein said heat exchanger (1024) further comprises:
a heating element disposed at least partially on an interior surface of said carrier housing (112).

3. The system according to claim 2, wherein said heating element comprises a folded tubular geometry.

4. The system according to any one of the preceding claims, wherein said induction heater comprises:
an induction coil (2026); and
a tube conduit (2030) coaxially disposed within said induction coil (2026).

5. The system according to any one of the preceding claims, wherein said induction heater is disposed within said lubricant catch (126).

6. The system according to any one of claims 4 and 5, wherein said induction coil (2026) is disposed in a potting material (2028).

7. The system according to any one of the preceding claims, wherein said induction heater is coupled with a rearward portion (112B) of said carrier housing (112).

8. The system according to any one of the preceding claims, wherein said electrical power source (12) comprises a regenerative braking apparatus (1026).

9. The system according to any one of the preceding claims, wherein said electrical power source (12) comprises a solar panel.

10. The system according to any one of the preceding claims, wherein:
said axle assembly (100) is coupled with an at least partially electric vehicle; and
said electrical power source (12) comprises a motor-generator.

## Patentansprüche

1. System für ein Fahrzeug (1), umfassend:
eine Achsbaugruppe (100), aufweisend ein Trägergehäuse (112), wobei das Trägergehäuse (112) eine Ölwanne (122) definiert;
ein flüssiges Schmiermittel, das zumindest teilweise in der Ölwanne (122) angeordnet ist;
einen Wärmetauscher (1024; 2024; 3024; 4024; 5024), aufweisend ein oder mehrere elektrisch leitende Elemente, wobei das eine oder die mehreren elektrisch leitenden Elemente in dem Trägergehäuse (112) angeordnet sind; und
eine mit dem Wärmetauscher (1024) elektrisch verbundene elektrische Energiequelle (12);
wobei der Wärmetauscher (1024, 2024, 3024, 4024, 5024) ferner eine zumindest teilweise innerhalb des Trägergehäuses (112) angeordnete Induktionsheizvorrichtung umfasst;
eine an einer Innenfläche des Trägergehäuses (112) angeordnete Schmiermittelauffangvorrichtung (126); und
einen in Fluidverbindung mit der Schmiermittelauffangvorrichtung (126) stehenden Schmiermitteldurchlass (128), wobei die Induktionsheizvorrichtung innerhalb des Schmiermitteldurchlasses (128) angeordnet ist.

2. System nach Anspruch 1, wobei der Wärmetauscher (1024) ferner umfasst:
eine zumindest teilweise an einer Innenfläche des Trägergehäuses (112) angeordnete Induktionsheizvorrichtung.

3. System nach Anspruch 2, wobei die Induktionsheizvorrichtung eine gefaltete rohrförmige Geometrie aufweist.

4. System nach einem der vorhergehenden Ansprüche, wobei die Induktionsheizvorrichtung umfasst:
eine Induktionsspule (2026); und
einen koaxial innerhalb der Induktionsspule (2026) angeordneten Rohrdurchlass (2030).

5. System nach einem der vorhergehenden Ansprüche, wobei die Induktionsheizvorrichtung innerhalb der Schmiermittelauffangvorrichtung (126) angeordnet ist.

6. System nach einem der Ansprüche 4 und 5, wobei die Induktionsspule (2026) in einem Vergussmaterial (2028) angeordnet ist.

7. System nach einem der vorhergehenden Ansprüche, wobei die Induktionsheizvorrichtung mit einem rückwärtigen Bereich (112B) des Trägergehäuses (112) gekoppelt ist.

8. System nach einem der vorhergehenden Ansprüche, wobei die elektrische Energiequelle (12) eine regenerative Bremsvorrichtung (1026) umfasst.

9. System nach einem der vorhergehenden Ansprüche, wobei die elektrische Energiequelle (12) ein Solarmodul umfasst.

10. System nach einem der vorhergehenden Ansprüche, wobei:
die Achsbaugruppe (100) mit einem zumindest teilweise elektrischen Fahrzeug gekoppelt ist; und die elektrische Energiequelle (12) einen Motor-Generator umfasst.

## Revendications

1. Système pour un véhicule (1), comprenant :
un assemblage d'essieux (100) qui comporte un carter de support (112), dans lequel ledit carter de support (112) définit une cuve collectrice (122) ;
un lubrifiant fluide qui est au moins partiellement disposé à l'intérieur de ladite cuve collectrice (122) ;
un échangeur thermique (1024 ; 2024 ; 3024 ; 4024 ; 5024) qui comporte un ou plusieurs élément(s) électriquement conducteur(s), dans lequel lesdits un ou plusieurs éléments électriquement conducteurs sont disposés à l'intérieur dudit carter de support (112) ; et
une source d'alimentation en énergie électrique (12) qui est en connexion électrique avec ledit échangeur thermique (1024) ;
dans lequel ledit échangeur thermique (1024 ; 2024 ; 3024 ; 4024 ; 5024) comprend en outre un moyen de chauffage à induction qui est disposé au moins partiellement à l'intérieur dudit carter de support (112) ;
un moyen de capture de lubrifiant (126) qui est disposé sur une surface intérieure dudit carter de support (112) ; et
un conduit de lubrifiant (128) qui est en communication en termes de fluide avec ledit moyen de capture de lubrifiant (126) ; dans lequel ledit moyen de chauffage à induction est disposé à l'intérieur dudit conduit de lubrifiant (128).

2. Système selon la revendication 1, dans lequel ledit échangeur thermique (1024) comprend en outre :
un élément chauffant qui est disposé au moins partiellement sur une surface intérieure dudit carter de support (112).

3. Système selon la revendication 2, dans lequel ledit élément chauffant comprend une géométrie tubulaire repliée.

4. Système selon l'une quelconque des revendications précédentes, dans lequel ledit moyen de chauffage à induction comprend :
une bobine d'induction (2026) ; et
un conduit tubulaire (2030) qui est disposé de façon coaxiale à l'intérieur de ladite bobine d'induction (2026).

5. Système selon l'une quelconque des revendications précédentes, dans lequel ledit moyen de chauffage à induction est disposé à l'intérieur dudit moyen de capture de lubrifiant (126).

6. Système selon l'une quelconque des revendications 4 et 5, dans lequel ladite bobine d'induction (2026) est disposée à l'intérieur d'un matériau d'empotage (2028).

7. Système selon l'une quelconque des revendications précédentes, dans lequel ledit moyen de chauffage à induction est couplé à une section arrière (112B) dudit carter de support (112).

8. Système selon l'une quelconque des revendications précédentes, dans lequel ladite source d'alimentation en énergie électrique (12) comprend un appareil de freinage régénératif (1026).

9. Système selon l'une quelconque des revendications précédentes, dans lequel ladite source d'alimentation en énergie électrique (12) comprend un panneau solaire.

10. Système selon l'une quelconque des revendications précédentes, dans lequel :
ledit assemblage d'essieux (100) est couplé à un véhicule au moins partiellement électrique ; et ladite source d'alimentation en énergie électrique (12) comprend un moteur-générateur.
